# EUROPÄISCHE PATENTSCHRIFT

(11) **EP 2 636 438 B1**
(45) Veröffentlichungstag und Bekanntmachung des Hinweises auf die Patenterteilung: **04.06.2014**
(21) Anmeldenummer: 12008217.7
(22) Anmeldetag: 08.12.2012
(51) Int. Cl.: B01D 35/18, B01D 25/164, B01D 25/21

(54) **Filterelement zum Einsatz als Kopf- oder Endelement für eine Filterpresse**
Filter element for use as a head or end member for a filter press
Élément de filtre pour l'utilisation comme élément de tête ou d'extrémité pour une filtre-presse

(30) Priorität: 10.03.2012 DE 102012004922
(43) Veröffentlichungstag der Anmeldung: 11.09.2013
(73) Patentinhaber: LENSER Filtration GmbH, 89242 Senden (DE)
(72) Erfinder: Wildner, Gerhard, D-89278 Nersingen (DE)
(74) Vertreter: Dziewior, Joachim

(56) Entgegenhaltungen:
- EP-A1- 1 088 580
- WO-A1-2006/137502
- GB-A- 488 280
- GB-A- 961 609
- JP-A- 2008 043 903

## Beschreibung

Die Erfindung betrifft ein Filterelement zum Einsatz als Kopf- oder Endelement in einer aus mehreren aneinander gereihten, randseitig dichtend einander anliegenden Filterelementen bestehenden Filterpresse, wobei die Filterelemente zwischen sich Filterkammern bilden und randseitig mit einem die Filterkammer abschließenden Rahmen versehen sind.

Derartige Filterelemente sind in unterschiedlicher Ausführungsform aus dem Stand der Technik bekannt. Hierbei werden die als Kopf- bzw. Endelement eingesetzten Filterelemente häufig mit den Stahlteilen der Filterpresse verschraubt. Insbesondere bei Filtrationsprozessen unter höheren Temperaturen beobachtet man bei nicht verschraubten Filterelementen erhebliche Verbiegungen dieser Kopf- und Endelemente, da diese auf der einen Seite mit dem heißen Medium, also dem Filtrat in Berührung kommen, während sie auf der entgegengesetzten Seite dem kühleren Stahlteil anliegen. Da sich hierbei dann die beiden Seiten des Filterelements unterschiedlich ausdehnen, führt dies in der Art des Bimetall-Effektes zu den beobachteten Verbiegungen. Hierbei führt auch der Einsatz einer Isolationsplatte zwischen dem Kopf- bzw. Endelement und dem Stahlteil der Filterpresse zu keinen nennenswerten Verbesserungen.

Der Erfindung liegt daher die Aufgabe zugrunde, ein Filterelement der eingangs genannten Art dahingehend zu verbessern, dass die beobachteten Verbiegungen auch bei heißen Filtrationsprozessen nicht oder allenfalls nur geringfügig auftreten.

Diese Aufgabe wird nach der Erfindung dadurch gelöst, dass das als Kopf- oder Endelement eingesetzte Filterelement auf seiner den übrigen Filterelementen abgewandten Seite mit einem in Umfangsrichtung im Rahmen verlaufenden Heizkanal versehen ist, welcher mit einem Heizmedium bestückt oder befüllbar ist.

Der durch die Erfindung erreichte Vorteil besteht im Wesentlichen darin, dass die Filterplatte auf der nicht mit dem heißen Filtrat in Berührung kommenden Seite aufgeheizt wird, wobei es entscheidend allein auf den gegenüber dem plattenförmigen Innenbereich des Filterelements deutlich dickerem Rahmen ankommt, da aufgrund der relativ geringen Wärmeleitung der üblichen Materialien, also beispielsweise Polypropylen, ein starker Temperaturgradient im Rahmen auftritt. Durch die zusätzliche Erwärmung der anderen Rahmenseite mit Hilfe des Heizkanals erfolgt eine wesentlich homogenere Erwärmung, wodurch die sonst zu beobachtenden Verbiegungen weitgehend vermieden werden können.

In bevorzugter Ausführungesform der Erfindung ist der Heizkanal auf der zur Ebene der Filterelemente parallelen Rahmenfläche angeordnet und nutförmig ausgebildet. Dies ermöglicht eine relativ einfache Einbringung des Heizkanals in ein fertiges Filterelement durch einfache spanabhebende Maßnahmen.

Hierbei ist es weiter von Vorteil, wenn der Heizkanal mit zueinander parallelen Nutwänden und einem halbkreisförmigen Nutboden versehen ist.

In einer ersten Ausführungsform der Erfindung ist vorgesehen, dass der Heizkanal über wenigstens einen Filtratkanal mit der benachbarten Filterkammer in Verbindung steht und der Heizkanal hierüber mit Filtratflüssigkeit als Heizmedium befüllbar ist. Bei dieser Ausgestaltung sind keinerlei zusätzliche Maßnahmen erforderlich; durch Füllung der Filterkammern erfolgt gleichzeitig auch die Befüllung des Heizkanals, so dass eine zeitgleiche Erwärmung der beiden Rahmenseiten des Kopf- bzw. Endelementes erfolgt.

Weiter hat es sich als vorteilhaft erwiesen, wenn der Heizkanal ringartig in sich geschlossen längs des gesamtes Rahmens umläuft.

Es besteht jedoch auch die Möglichkeit, dass der ringartig längs des Rahmens umlaufende Heizkanal in Teilbereichen unterbrochen ist, wobei dann im jeden der einzelnen Abschnitte des Heizkanals Filtratkanäle münden. Eine derartige Bauform ist etwa dann denkbar, wenn Befestigungselemte oder ähnliches vorgesehen sind, die sich über die gesamte Rahmenbreite bis an den Rand der Filterkammer erstrecken.

Sollte aus bestimmten Gründen eine Befüllung des Heizkanals mit der Filtratflüssigkeit nicht erwünscht sein, so besteht auch die Möglichkeit, dass der Heizkanal wahlweise mit einem externen Medium wie Heißwasser, Thermoöl oder dergleichen beschickt wird. Hierbei ist es grundsätzlich auch denkbar, mit einem derartigen externen Medium zunächst beispielsweise eine Vorerwärmung mit höherer Temperatur vorzunehmen, um anschließend auf die Filtratflüssigkeit umzustellen.

Grundsätzlich besteht hierbei natürlich auch die Möglichkeit, den Heizkanal wahlweise mit Heizluft oder dergleichen zu beschicken.

Eine weitere Möglichkeit besteht darin, dass der Heizkanal mit elektrischen Heizelementen bestückt ist. Soweit diese Heizelemente flüssigkeitsdicht ausgestaltet sind, besteht darüber hinaus die Möglichkeit, diese zusätzlich zu einer Befüllung des Heizkanals mit Filtratflüssigkeit vorzusehen.

Um für die Kopf- bzw. Endelemente keine Sonderanfertigungen vornehmen zu müssen, ist im Rahmen der Erfindung weiter vorgesehen, dass die Kopf- bzw. Endelemente weitgehend baugleich zu den übrigen Filterelementen ausgebildet sind, auf der diesen Filterelementen abgewandten Seite jedoch - zusätzlich zu den üblicherweise ohnehin vorgesehenen Stütznocken - mit zusätzlichen Stützelementen versehen sind. Diese sind in der Regel notwendig, um den Druck aus den beiden endseitigen Filterkammmer aufzunehmen.

Diese zusätzlichen Stützelemente sind vorteilhafterweise als zylindrische Scheiben ausgebildet und am Filterelement befestigt, vorzugsweise verschraubt.

Im folgenden wird die Erfindung an einem in der Zeichnung dargestellten Ausführungsbeispiel näher erläutert; es zeigen:
- Fig. 1: ein Filterelement nach der Erfindung in Draufsicht,
- Fig. 2: den Eckbereich des Gegenstands nach Figur 1 in einer Detaildarstellung,
- Fig. 3: einen Schnitt gemäß der Linie A-A gemäß Figur 2,
- Fig. 4: einen Schnitt längs der Linie G-G nach Figur 2.

Das in der Zeichnung dargestellte Filterelement ist vorgesehen für den Einsatz als Kopf- oder Endelement in einer Filterpresse, in welcher mehrere Filterelemente an einander gereiht sind und randseitig dichtend einander anliegen. Die Filterelemente bilden hierbei zwischen sich Filterkammern 2 und sind randseitig mit einem die Filterkammern 2 abschließenden Rahmen 1 versehen.

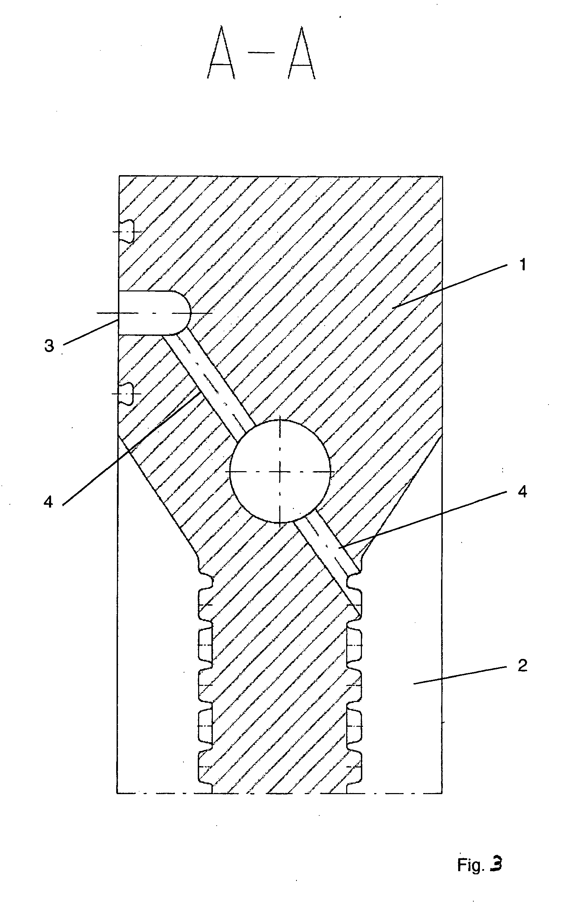

Da das Kopf- und Endelement nur auf einer Seite (in Figur 3 auf der rechten Seite) mit der Filtratflüssigkeit in Berührung kommt, beobachtet man jedenfalls dann, wenn die Filtratflüssigkeit eine höhere Temperatur aufweist, Verbiegungen des Kopf- bzw. Endelements.

Um dies zu vermeiden, ist das als Kopf- bzw. Endelement eingesetzte Filterelement auf seiner den übrigen Filterelementen abgewandten Seite mit einem Heizkanal 3 versehen, der in Umfangsrichtung des Rahmens 1 verläuft und der mit einem Heizmedium bestückt oder befüllt werden kann.

Wie sich insbesondere aus der Figur 3 ersehen lässt, ist der Heizkanal 3 auf der zur Ebene der Filterelemente parallelen Rahmenfläche angeordnet und nutförmig ausgebildet. In dem dargestellten Ausführungsbeispiel ist der Heizkanal 3 mit zueinander parallelen Nutwänden und einem halbkreisförmigen Nutboden versehen, wodurch der Heizkanal keine Ecken aufweist, so dass die Gefahr von Schmutzablagerungen gering ist und eine gegebenenfalls doch notwendig werdende Reinigung einfach durchgeführt werden kann. Grundsätzlich sind jedoch auch andere Querschnittsformen, zum Beispiels trapezförmig, möglich.

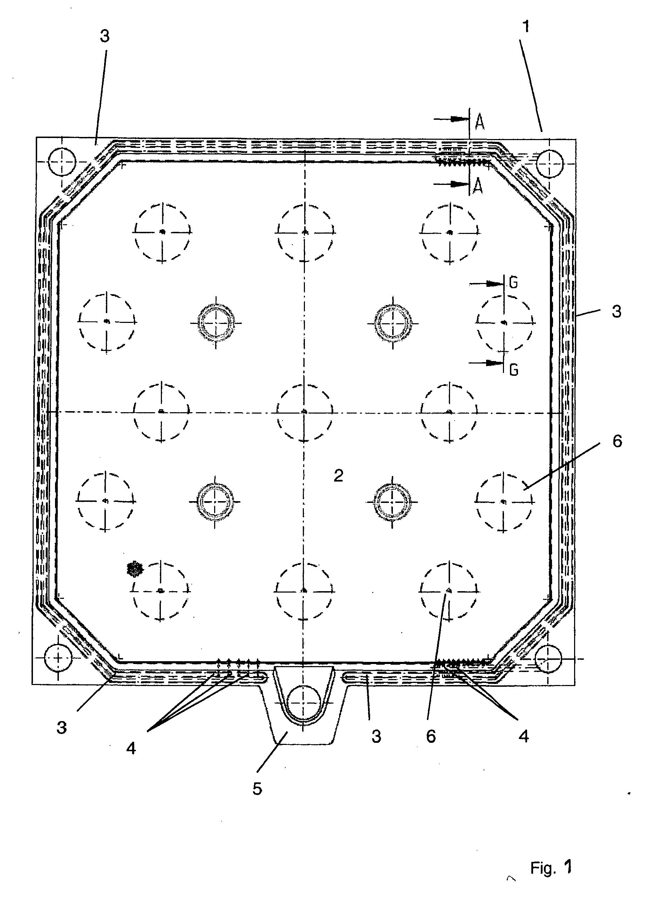

Wie sich weiter sowohl aus der Figur 1 wie auch aus der Figur 3 ersehen lässt, steht der Heizkanal 3 über wenigstens einen Filtratkanal 4 mit der benachbarten Filterkammer in Verbindung und ist hierüber mit der als Heizmedium dienenden Filtratflüssigkeit befüllbar.

Der Heizkanal 3 ist vorzugsweise so ausgebildet, dass er ringartig in sich geschlossen längs des gesamten Rahmens 1 umläuft. Es besteht jedoch auch die in Figur 1 dargestellte Möglichkeit, dass der ringartig längs des Rahmens 1 umlaufende Heizkanal 3 in Teilbereichen - hier im unteren Bereich - unterbrochen ist, soweit dort Anschlusselemente 5 oder ähnliches vorgesehen sind, die sich bis zum Rand der Filterkammer erstrecken. Dann ist es jedoch erforderlich, dass in jedem der einzelnen Abschnitte des Heizkanals 3 Filtratkanäle 4 münden, um eine gleichmäßige Befüllung des Heizkanals 3 zu gewährleisten. Soweit die Entleerung des Heizkanals allein unter der Wirkung der Schwerkraft erfolgt, sind Filtratkanäle jedenfalls auch am unteren Rand des Filterelements vorzusehen.

Wahlweise kann der Heizkanal auch mit einem externen Medium wie Heißwasser, Thermoöl oder dergleichen beschickt werden. Ebenso besteht auch die Möglichkeit, den Heizkanal 3 wahlweise mit Heißluft oder ähnlichem zu beschicken.

Schließlich besteht auch die in der Zeichnung nicht näher dargestellte Möglichkeit, den Heizkanal 3 mit elektrischen Heizelementen zu bestücken, die entweder in einem dann flüssigkeitsdicht abgeschlossenen Heizkanal angeordnet sind oder aber ihrerseits flüssigkeitsdicht ausgebildet sind.

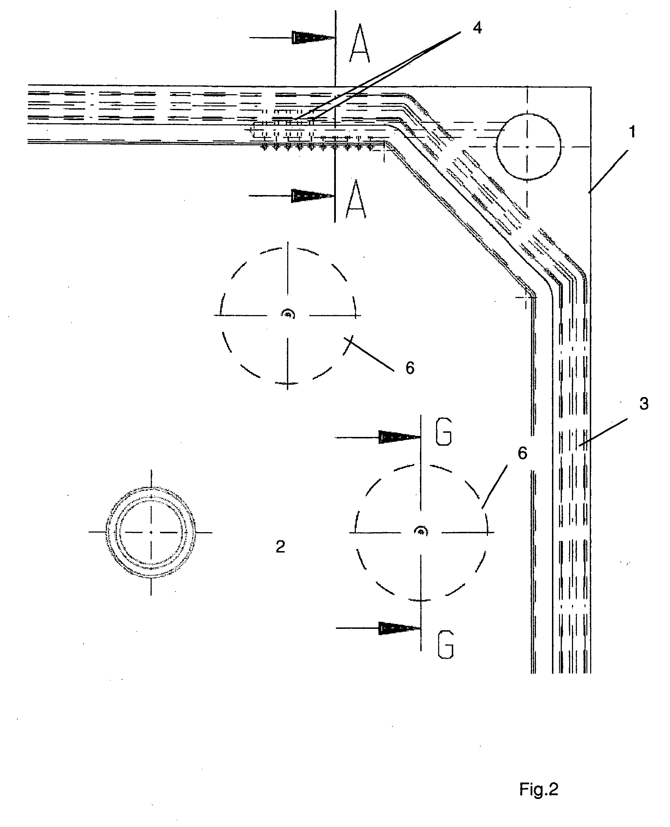

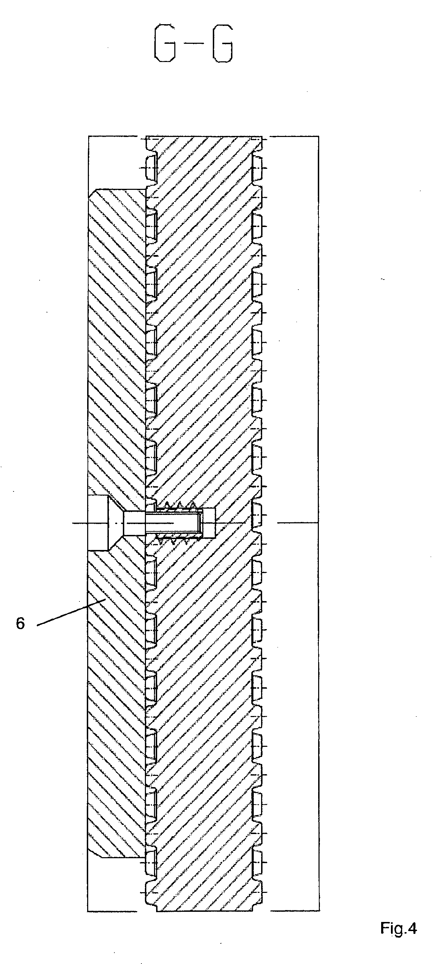

Wie sich der Zeichnung weiter entnehmen lässt, sind die Kopf- bzw. Endelemente weitestgehend baugleich zu den übrigen Filterelementen ausgebildet, wodurch innerhalb der Filterplatte eine hohe Homogonität auch unter thermischem Einfluss gewährleistet ist. Da jedoch die Kopf- bzw. Endelemente nur einseitig dem in der Filterkammer aufgebauten Druck ausgesetzt sind, sind das Kopf- und Endelement auf der den übrigen Filterelementen abgewandten Seite mit zusätzlichen Stützelementen 6 versehen, wie dies aus den Figuren 1, 2 und 4 hervorgeht. Wie dort weiter zu sehen ist, sind diese zusätzlichen Stützelemente 6 als zylindrischen Scheiben ausgebildet und - wie die Figur 4 zeigt - mit dem Filterelement verschraubt.

## Patentansprüche

1. Filterelement zum Einsatz als Kopf- oder Endelement in einer aus mehreren aneinander gereihten, randseitig dichtend einander anliegenden Filterelementen bestehenden Filterpresse, wobei die Filterelemente zwischen sich Filterkammern (2) bilden und randseitig mit einem die Filterkammern abschließenden Rahmen (1) versehen sind, **dadurch gekennzeichnet, daß** das als Kopf- oder Endelement eingesetzte Filterelement auf seiner den übrigen Filterelementen abgewandten Seite mit wenigstens einem im Rahmen (1) angeordneten Heizkanal (3) versehen ist, welcher mit einem Heizmedium bestückt oder befüllbar ist.

2. Filterelement nach Anspruch 1, **dadurch gekennzeichnet, daß** der Heizkanal (3) in Umfangsrichtung des Rahmens (1) verläuft.

3. Filterelement nach Anspruch 1 oder 2, **dadurch gekennzeichnet, daß** der Heizkanal (3) auf der zur Ebene der Filterelemente parallelen Rahmenfläche angeordnet und nutförmig ausgebildet ist.

4. Filterelement nach einem der Ansprüche 1 bis 3,
**dadurch gekennzeichnet, daß** der Heizkanal (3) mit zueinander parallelen Nutwänden und einem halbkreisförmigen Nutboden versehen ist.

5. Filterelement nach einem der Ansprüche 1 bis 4,
**dadurch gekennzeichnet, daß** der Heizkanal (3) über wenigstens einen Filtratkanal (4) mit der benachbarten Filterkammer (2) in Verbindung steht und der Heizkanal (3) hierüber mit Filtratflüssigkeit als Heizmedium befüllbar ist.

6. Filterelement nach einem der Ansprüche 1 bis 5,
**dadurch gekennzeichnet, daß** der Heizkanal (3) ringartig in sich geschlossen längs des gesamten Rahmens (1) umläuft.

7. Filterelement nach einem der Ansprüche 1 bis 5,
**dadurch gekennzeichnet, daß** der ringartig längs des Rahmens (1) umlaufende Heizkanal (3) in Teilbereichen unterbrochen ist, wobei dann in jeden der einzelnen Abschnitte des Heizkanals (3) Filtratkanäle (4) münden.

8. Filterelement nach einem der Ansprüche 1 bis 7,
**dadurch gekennzeichnet, daß** der Heizkanal (3) wahlweise mit einem externen Medium wie Heißwasser, Thermoöl oder dergleichen beschickt wird.

9. Filterelement nach einem der Ansprüche 1 bis 7,
**dadurch gekennzeichnet, daß** der Heizkanal (3) wahlweise mit Heißluft oder dergleichen beschickt wird.

10. Filterelement nach einem der Ansprüche 1 bis 4,
**dadurch gekennzeichnet, daß** der Heizkanal (3) mit elektrischen Heizelementen bestückt ist.

11. Filterelement nach einem der Ansprüche 1 bis 10,
**dadurch gekennzeichnet, daß** die Kopf- bzw. Endelemente weitgehend baugleich zu den übrigen Filterelementen ausgebildet sind, auf der diesen Filterelementen abgewandten Seite jedoch mit zusätzlichen Stützelementen (6) versehen sind.

12. Filterelement nach Anspruch 11, **dadurch gekennzeichnet**, die zusätzlichen Stützelemente (6) als zylindrische Scheiben ausgebildet und mit dem Filterelement verschraubt sind.

## Claims

1. A filter element for use as the head or end element in a filter press comprising a plurality of filter elements which are arranged in a row with each other and which bear against each other in sealing relationship at the edge, wherein the filter elements form filter chambers (2) between them and are provided at the edge with a frame (1) closing off the filter chambers, **characterised in that** the filter element used as the head or end element is provided on its side remote from the other filter elements with at least one heating passage (3) which is arranged in the frame (1) and which is equipped with or can be filled with a heating medium.

2. A filter element according to claim 1 **characterised in that** the heating passage (3) extends in the peripheral direction of the frame (1).

3. A filter element according to claim 1 or claim 2 **characterised in that** the heating passage (3) is arranged on the frame surface parallel to the plane of the filter elements and is of a groove-shaped configuration.

4. A filter element according to one of claims 1 to 3 **characterised in that** the heating passage (3) is provided with mutually parallel groove walls and a semicircular groove bottom.

5. A filter element according to one of claims 1 to 4 **characterised in that** the heating passage (3) is in communication with the adjacent filter chamber (2) by way of at least one filtrate passage (4) and the heating passage (3) can be filled by way thereof with filtrate liquid as heating medium.

6. A filter element according to one of claims 1 to 5 **characterised in that** the heating passage (3) extends in a ring-like configuration closed in itself along the entire frame (1).

7. A filter element according to one of claims 1 to 5 **characterised in that** the heating passage (3) which extends peripherally in a ring-like configuration along the frame (1) is interrupted in sub-regions, wherein filtrate passages (4) then open into each of the individual portions of the heating passage (3).

8. A filter element according to one of claims 1 to 7 **characterised in that** the heating passage (3) is fed selectively with an external medium like hot water, thermal oil or the like.

9. A filter element according to one of claims 1 to 7 **characterised in that** the heating passage (3) is fed selectively with hot air or the like.

10. A filter element according to one of claims 1 to 4 **characterised in that** the heating passage (3) is equipped with electric heating elements.

11. A filter element according to one of claims 1 to 10 **characterised in that** the head or end elements are of substantially the same structure as the other filter elements, but on the side remote from said filter elements are provided with additional support elements (6).

12. A filter element according to claim 11 **characterised in that** the additional support elements (6) are in the form of cylindrical discs and are screwed to the filter element.

## Revendications

1. Élément filtrant destiné à être utilisé comme élément de tête ou d'extrémité dans un filtre-presse composé de plusieurs éléments filtrants alignés, appliqués de manière étanche les uns contre les autres par leurs bords, les éléments filtrants formant entre eux des chambres de filtration (2) et étant pourvus sur leurs bords d'un cadre (1) fermant les chambres de filtration, **caractérisé en ce que** l'élément filtrant utilisé comme élément de tête ou d'extrémité est pourvu, de son côté éloigné des autres éléments filtrants, d'au moins un canal de chauffage (3) qui est disposé dans le cadre (1) et qui est équipé ou peut être empli d'un agent chauffant.

2. Élément filtrant selon la revendication 1, **caractérisé en ce que** le canal de chauffage (3) s'étend dans la direction périphérique du cadre (1).

3. Élément filtrant selon la revendication 1 ou 2, **caractérisé en ce que** le canal de chauffage (3) est disposé sur la surface du cadre parallèle au plan des éléments filtrants et réalisé en forme de rainure.

4. Élément filtrant selon l'une des revendications 1 à 3, **caractérisé en ce que** le canal de chauffage (3) est pourvu de parois de rainure parallèles l'une à l'autre et d'un fond de rainure semi-circulaire.

5. Élément filtrant selon l'une des revendications 1 à 4, **caractérisé en ce que** le canal de chauffage (3) est en communication avec la chambre de filtration (2) adjacente par l'intermédiaire d'au moins un canal de filtrat (4), et le canal de chauffage (3) peut, par l'intermédiaire de celui-ci, être empli de liquide de filtrat utilisé comme agent chauffant.

6. Élément filtrant selon l'une des revendications 1 à 5, **caractérisé en ce que** le canal de chauffage (3) s'étend tout autour du cadre (1) et est fermé sur lui-même à la manière d'un anneau.

7. Élément filtrant selon l'une des revendications 1 à 5, **caractérisé en ce que** le canal de chauffage (3) qui s'étend autour du cadre (1) à la manière d'un anneau est interrompu en zones partielles, des canaux de filtrat (4) débouchant dans chacune des différentes parties du canal de chauffage (3).

8. Élément filtrant selon l'une des revendications 1 à 7, **caractérisé en ce que** le canal de chauffage (3) est alimenté au choix avec un agent externe comme de l'eau chaude, une huile thermique ou analogue.

9. Élément filtrant selon l'une des revendications 1 à 7, **caractérisé en ce que** le canal de chauffage (3) est alimenté au choix avec de l'air chaud ou analogue.

10. Élément filtrant selon l'une des revendications 1 à 4, **caractérisé en ce que** le canal de chauffage (3) est équipé d'éléments chauffants électriques.

11. Élément filtrant selon l'une des revendications 1 à 10, **caractérisé en ce que** les éléments de tête et/ou d'extrémité sont de construction en grande partie identique à celle des autres éléments filtrants, mais sont pourvus d'éléments d'appui supplémentaires (6) du côté éloigné de ces éléments filtrants.

12. Élément filtrant selon la revendication 11, **caractérisé en ce que** les éléments d'appui supplémentaires (6) sont réalisés sous la forme de disques cylindriques et vissés avec l'élément filtrant.
